# EUROPÄISCHE PATENTANMELDUNG

(11) **EP 1 520 736 A2**
(43) Veröffentlichungstag der Anmeldung: **06.04.2005**
(21) Anmeldenummer: 04021439.7
(22) Anmeldetag: 09.09.2004
(51) Int. Cl.: B60H 1/00

(54) **Getriebeanordnung für eine Luftregelungsvorrichtung, insbesondere für eine Klimaanlage eines Kraftfahrzeugs**

(30) Priorität: 02.10.2003 DE 10346539
(71) Anmelder: Behr GmbH & Co. KG, 70469 Stuttgart (DE)
(72) Erfinder: Hegner, Hilmar, 71364 Winnenden (DE); Klingler, Dietrich, Dipl.-Ing., 73540 Heubach (DE); Voigt, Klaus, Dipl.-Ing., 74321 Bietigheim-Bissingen (DE)

(57) **Zusammenfassung**

Die Erfindung betrifft eine Getriebeanordnung (1) für eine Luftregelungsvorrichtung (L) mit mindestens einem betätigbaren Stellelement zur Regelung eines Luftstroms, insbesondere für ein Belüftungssystem eines Kraftfahrzeugs, bei der das Stellelement mittels der Getriebeanordnung (1) über eine Antriebswelle (2) und eine Abtriebswelle (3, 3') angetrieben ist, wobei die Getriebeanordnung (1) durch ein Zahnradgetriebe gebildet ist, welches mindestens ein an der Antriebswelle (2) angeordnetes Zahnrad und/oder Zahnsegment (5) und ein an der Abtriebswelle (3, 3') angeordnetes Zahnrad (10) und/oder Zahnsegment (10') aufweist, wobei an der Antriebswelle (2) und an der Abtriebswelle (3, 3') mindestens je ein Rastelement (16, 15, 15') vorgesehen ist, das ein Verrasten der Abtriebswelle (3, 3') bei sich drehender Antriebswelle (2) ermöglicht.

## Beschreibung

Die Erfindung betrifft eine Getriebeanordnung für eine Luftregelungsvorrichtung, insbesondere für ein Belüftungssystem eines Kraftfahrzeugs, gemäß dem Oberbegriff des Anspruchs 1.

Zur Übertragung von Stellbewegungen auf Klappen oder andere verstellbare Elemente zur Steuerung von Luftströmen in Kraftfahrzeug-Klimaanlagen werden üblicherweise Kurvenscheiben-Getriebe verwendet. Derartige Kurvenscheiben-Getriebe benötigen jedoch einen relativ großen Bauraum und lassen in Hinblick auf ihren Betrieb noch Wünsche offen.

Es ist Aufgabe der Erfindung, eine verbesserte Getriebeanordnung für eine Luftregelungsvorrichtung zur Verfügung zu stellen.

Diese Aufgabe wird gelöst durch eine Luftregelungsvorrichtung mit den Merkmalen des Anspruchs 1. Vorteilhafte Ausgestaltungen sind Gegenstand der Unteransprüche.

Erfindungsgemäß ist eine Getriebeanordnung für eine Luftregelungsvorrichtung mit mindestens einem betätigbaren Stellelement zur Regelung eines Luftstroms, insbesondere für ein Belüftungssystem eines Kraftfahrzeugs, vorgesehen, bei der das Stellelement mittels der Getriebeanordnung wobei an der Antriebswelle und an der Abtriebswelle neben einem Zahnrad oder einem Zahnsegment mindestens je ein Rastelement vorgesehen ist, das ein Verrasten der Abtriebswelle bei sich drehender Antriebswelle ermöglicht. Eine derartige Getriebeanordnung baut relativ klein, so dass nur wenig Bauraum benötigt wird.

Hierbei weist das Rastelement bevorzugt ein Scheibensegment auf, wobei das Scheibensegment durch einen scheibenartigen Bereich mit einem vorstehenden Rand über einen Teil des Umfangs, eine Scheibe mit einem kurvenförmigen Ausschnitt oder einen vorstehenden Bereich mit einem gekrümmten, ausschnittsartigen Bereich gebildet sein.

Vorzugsweise ist das Rastelement in axialer Richtung versetzt benachbart zum Zahnrad oder Zahnsegment angeordnet. Bevorzugt sind das Rastelement und das Zahnrad beziehungsweise das Zahnsegment einstückig als Kunststoff-Spritzgussteil ausgebildet. Dies ermöglicht eine einfache und kostengünstige Herstellung.

Bevorzugt wird das Zahnrad und/oder das Zahnsegment und/oder das Rastelement auf die Antriebswelle beziehungsweise die Abtriebswelle gesteckt, wobei eine formschlüssige Verbindung vorgesehen ist, insbesondere ein Vierkant- oder Sechskantprofil. Dies ermöglicht eine optimale Materialpaarung, wobei die Materialien in Hinblick auf die zu erwartenden Belastungen gewählt werden können.

Eine derartige Getriebeanordnung kann insbesondere in einem Belüftungssystem für ein Kraftfahrzeug, beispielsweise bei einem Lufteinströmer oder einer Klappenanordnung eines Luftführungsgehäuses einer Klimaanlage verwendet werden.

Im Folgenden wird die Erfindung eines Ausführungsbeispiels unter Bezugnahme auf die Zeichnung im Einzelnen erläutert. In der Zeichnung zeigen:

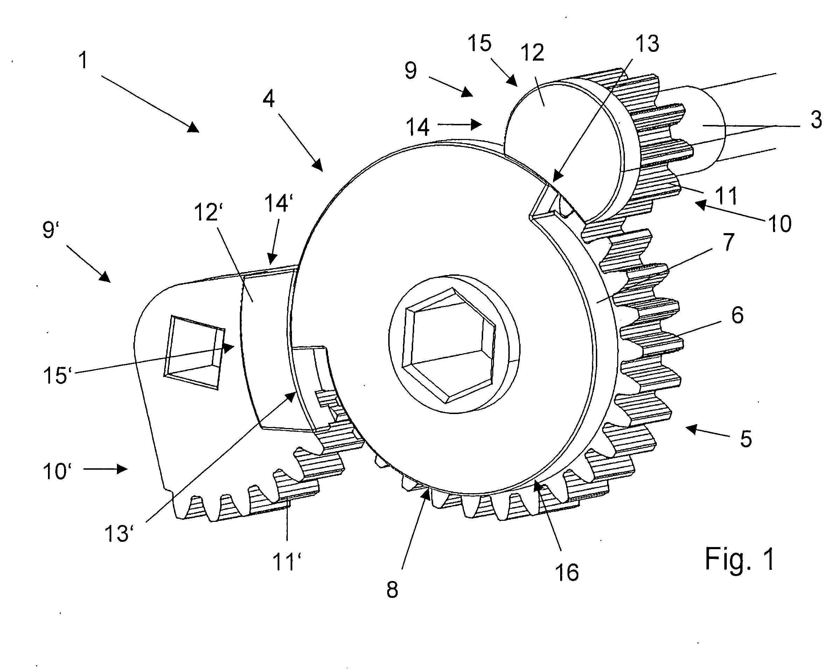

- Fig. 1: eine perspektivische Ansicht einer erfindungsgemäßen Getriebeanordnung gemäß dem Ausführungsbeispiel,
- Fig. 2a-c: Draufsichten auf verschiedene Stellungen der Getriebeanordnung von Fig. 1,

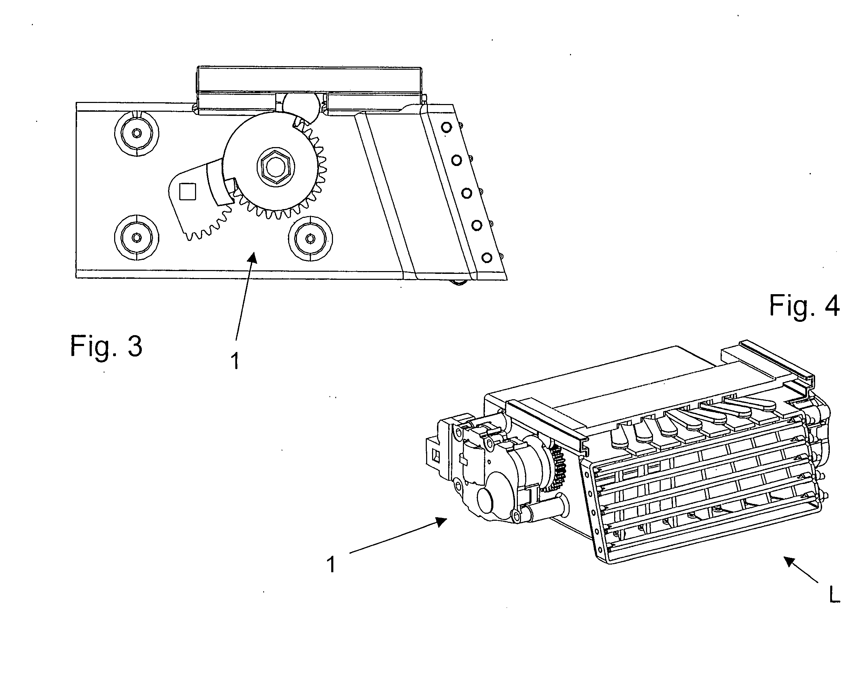

- Fig. 3: eine Seitenansicht einer Luftregelvorrichtung mit der Getriebeanordnung gemäß Fig. 1, und
- Fig. 4: eine perspektivische Darstellung der Luftregelvorrichtung von Fig. 3.

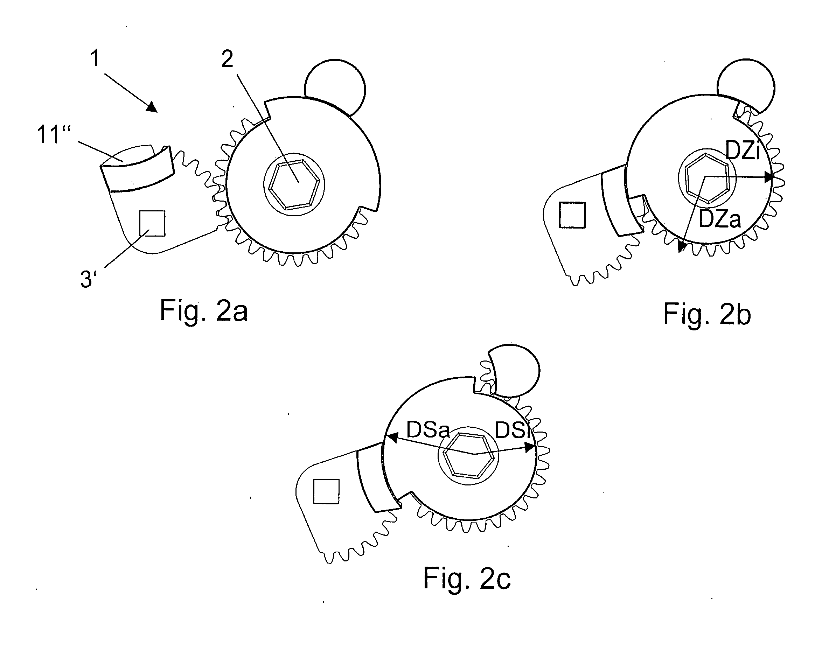

Eine Getriebeanordnung 1 für eine Luftregelvorrichtung L, vorliegend eine Lamellendüse mit einer Absperr-Klappe (nicht dargestellt) und Vertikal-Lamellen als betätigbare Stellelemente, die zur Regelung eines Luftstroms in einem Luftführungsgehäuse einer Kraftfahrzeug-Klimaanlage dienen, weist eine Antriebswelle 2 (siehe Figuren 2a-c) und zwei Abtriebswellen 3 und 3' (siehe Figuren 2a-c) auf. Auf die Antriebswelle 2 ist mittels eines an einem Ende derselben vorgesehenen Sechskants ein erstes Getriebeelement 4 mit einer entsprechenden Sechskant-Öffnung gesteckt. Das erste Getriebeelement 4 ist ein Kunststoff-Spritzgussteil, das ein Zahnsegment 5 mit Zähnen 6 aufweist, das 240° des Umfangs des ersten Getriebeelements 4 einnimmt. Der Kopfkreisdurchmesser des Zahnsegments 5 wird im Folgenden als DZa, der Fußkreisdurchmesser des Zahnsegments 5 wird im Folgenden als DZi bezeichnet. Im Bereich, in dem keine Zähne 6 vorgesehen sind, hat der restliche Umfang des ersten Getriebeelements 4 einen Durchmesser, welcher maximal dem Fußkreisdurchmesser DZi entspricht.

In axialer Richtung versetzt zu dem Zahnsegment 5 ist am ersten Getriebeelement 4 einstückig ausgebildet und direkt benachbart ein scheibenartiger Bereich 7 vorgesehen. Dieser scheibenartige Bereich 7 weist einen Außendurchmesser DSi auf, welcher maximal so groß wie der Fußkreisdurchmesser DZi ist. Im Bereich des Umfangs, in dem keine Zähne 6 vorgesehen sind, weist der scheibenartige Bereich 7 einen Rand auf, der einen Durchmesser DSa hat, welcher minimal so groß ist wie der Kopfkreisdurchmesser DZa des Zahnsegments 5. Im Folgenden wird auf den scheibenartigen Bereich 7 in Verbindung mit seinem Rand auch als erstes Scheibensegment 8 Bezug genommen. Die Scheibendicke ist vorliegend etwa halb so groß wie die Dicke des Zahnsegments 5.

Mit dem Zahnsegment 5 des ersten Getriebeelements 4 kämmt als zweites Getriebeelement 9 ein Zahnrad 10 mit Zähnen 11, welches direkt an der Abtriebswelle 3 vorgesehen ist, beispielsweise mittels Spritzgießen, und eine dem Zahnsegment 5 entsprechende Dicke aufweist. Benachbart zum Zahnrad 10 ist eine Scheibe 12 mit einer dem scheibenartigen Bereich 7 des ersten Getriebeelements 4 entsprechenden Dicke vorgesehen, wobei die Scheibe 12 eine Aussparung 13 aufweist, welche sehnenartig mit einer Krümmung nach innen verläuft, wobei die Krümmung einen Durchmesser aufweist, welcher dem Durchmesser DSa des ersten Getriebeelements 4 entspricht. Auf die Scheibe 12 mit ihrer Aussparung 13 wird im Folgenden auch als zweites Scheibensegment 14 Bezug genommen. Die Scheibe 12 mit ihrer Aussparung 13 wird im Folgenden auf Grund ihrer später erläuterten Funktion im Zusammenspiel mit dem scheibenartigen Bereich 7 und dessen Rand (erstes Scheibensegment 8) werden das zweite Scheibensegment 14 und das erste Scheibensegment 8 als Rastelemente 15 beziehungsweise 16 bezeichnet.

Des Weiteren kämmt mit dem Zahnsegment 5 des ersten Getriebeelements 4 ein als Kunststoff-Spritzgussteil ausgebildetes drittes Getriebeelement 9', das mittels einer Vierkant-Verbindung drehfest auf der mit der Abtriebswelle 3' angeordnet ist. Das dritte Getriebeelement 9' weist über einen Teil seines Umfangs ein Zahnsegment 10' mit Zähnen 11' und über den restlichen Teil seines Umfangs einen Rand 11" mit einem Außendurchmesser, der dem der Zähne 11' entspricht, auf. Das Zahnsegment 10' und der Rand 11" weisen eine dem Zahnsegment 5 entsprechende Dicke auf.

Am nicht mit Zähnen 11' versehenen Bereich des dritten Getriebeelements 9' ist ein vorstehender Bereich 12' mit einer Höhe angebracht, welche der Dicke des scheibenartigen Bereichs 7 entspricht. Der vorstehende Bereich 12' weist im äußeren Bereich einen ausschnittsartigen Bereich 13' mit einer Krümmung auf, welche nach innen verläuft, wobei die Krümmung einen Durchmesser aufweist, welcher dem Durchmesser DSa des ersten Getriebeelements 4 entspricht. Auf den vorstehenden Bereich 12' wird im Folgenden auch als drittes Scheibensegment 14' Bezug genommen. Hierbei entspricht die Funktion des vorstehenden Bereichs 12' mit seinem ausschnittsartigen Bereich 13' dem der Scheibe 12 mit ihrem Ausschnitt 13, so dass hierauf im Folgenden auch als Rastelement 15' Bezug genommen wird.

Die Funktion der Getriebeanordnung 1 ist Folgende: Wird aus der Stellung, die in Fig. 2a dargestellt ist und bei der die Abtriebswelle 3 auf Grund des Nichteingriffs des Zahnsegments 5 in das Zahnrad 10 und des Eingriffs des Rastelements 16 in das Rastelement 15 rastet und die Abtriebswelle 3' auf Grund des Eingriffs des Zahnsegments 5 in das Zahnsegment 10' angetrieben wird, die Antriebswelle 2 entgegen dem Uhrzeigersinn gedreht, so bleibt das Zahnrad 10 des zweiten Getriebeelements 9 bis zum Erreichen der in Fig. 2b dargestellten Stellung außer Eingriff mit dem Zahnsegment 5 und das Rastelement 16 des ersten Getriebeelements 4 gleitet entlang der Aussparung 13, so dass die Abtriebswelle 3 bis zum Erreichen der in Fig. 2b dargestellten Stellung verrastet ist und sich somit das mit der Abtriebswelle 3 verbundene Stellelement nicht dreht. Hingegen greift das Zahnsegment 5 des ersten Getriebeelements 4 in das Zahnsegment des dritten Getriebeelements 9', so dass sich die Abtriebswelle 3' in Uhrzeigersinn dreht, bis die in Fig. 2b dargestellte Stellung erreicht ist.

Wird die Antriebswelle 2 von der in Fig. 2b dargestellten Stellung aus weiter entgegen dem Uhrzeigersinn gedreht, so gelangt das Zahnrad 10 des zweiten Getriebeelements 9 in Eingriff mit dem Zahnsegment 5 des ersten Getriebeelements 4 und beginnt sich zu drehen, wobei gemäß dem dargestellten Ausführungsbeispiel Drehungen von mehr als 360° möglich sind. In Folge der Drehung gelangt das Rastelement 15 außer Eingriff. Dagegen gelangt das Zahnsegment 5 des ersten Getriebeelements 4 außer Eingriff mit dem Zahnsegment 10' des dritten Getriebeelements 9', wobei der Rand des scheibenartigen Bereichs (Rastelement 16) in Anlage an den ausschnittsartigen Bereich 13' des vorstehenden Bereichs 12' des dritten Getriebeelements 9' (Rastelement 15') gelangt, so dass dieses verrastet wird, wie in Fig. 2c dargestellt.

Wird die Drehrichtung der Antriebswelle 2 umgekehrt, das heißt dreht sich die Antriebswelle 2 im Uhrzeigersinn, so gelangt ausgehend von Fig. 2c das Zahnsegment 5 zuerst außer Eingriff mit dem Zahnrad 10 während das Rastelement 16 Eingriff mit dem Rastelement 15 gelangt, das heißt die Abtriebswelle 3 wird verrastet. Kurz danach (Fig. 2b) gelangt das Zahnsegment 5 in Eingriff mit dem Zahnsegment 10', das heißt die Abtriebswelle 3' wird angetrieben.

Gemäß dem vorliegenden Ausführungsbeispiel dient die Abtriebswelle 3 der Betätigung der Vertikal-Lamellen und die Abtriebswelle 3' der Betätigung der Absperr-Klappe der Luftregelvorrichtung L. Über die Antriebswelle 3 können zusätzlich weitere Stellelemente, wie beispielsweise Horizontal-Lamellen betätigt werden.

### Bezugszeichenliste

- 1: Getriebeanordnung
- 2: Antriebswelle
- 3, 3': Abtriebswelle
- 4: erstes Getriebeelement
- 5: Zahnsegment
- 6: Zahn
- 7: scheibenartiger Bereich
- 8: erstes Scheibensegment
- 9: zweites Getriebeelement
- 9': drittes Getriebeelement
- 10: Zahnrad
- 10': Zahnsegment
- 11, 11': Zahn
- 11": Rand
- 12: Scheibe
- 12': vorstehender Bereich
- 13: Aussparung
- 13': ausschnittsartiger Bereich
- 14, 14': Scheibensegment
- 15, 15': Rastelement
- 16: Rastelement
- DSa: Außendurchmesser scheibenartiger Bereich im Bereich des Randes
- DSi: Außendurchmesser scheibenartiger Bereich
- DZa: Kopfdurchmesser des Zahnsegments
- DZi: Fußkreisdurchmesser des Zahnsegments
- L: Luftregelvorrichtung

## Patentansprüche

1. Getriebeanordnung für eine Luftregelungsvorrichtung (L) mit mindestens einem betätigbaren Stellelement zur Regelung eines Luftstroms, insbesondere für ein Belüftungssystem eines Kraftfahrzeugs, bei der das Stellelement mittels der Getriebeanordnung (1) über eine Antriebswelle (2) und eine Abtriebswelle (3, 3') angetrieben ist, wobei die Getriebeanordnung (1) durch ein Zahnradgetriebe gebildet ist, welches mindestens ein an der Antriebswelle (2) angeordnetes Zahnrad und/oder Zahnsegment (5) und ein an der Abtriebswelle (3, 3') angeordnetes Zahnrad (10) und/oder Zahnsegment (10') aufweist, **dadurch gekennzeichnet, dass** an der Antriebswelle (2) und an der Abtriebswelle (3, 3') mindestens je ein Rastelement (16, 15, 15') vorgesehen ist, das ein Verrasten der Abtriebswelle (3, 3') bei sich drehender Antriebswelle (2) ermöglicht.

2. Getriebeanordnung nach Anspruch 1, **dadurch gekennzeichnet, dass** das Rastelement (16, 15, 15') ein Scheibensegment (8, 14, 14') aufweist.

3. Getriebeanordnung nach Anspruch 1 oder 2, **dadurch gekennzeichnet, dass** das Rastelement (16, 15, 15') in axialer Richtung versetzt zum Zahnrad (10) oder Zahnsegment (5, 10') angeordnet ist.

4. Getriebeanordnung nach einem der vorhergehenden Ansprüche, **dadurch gekennzeichnet, dass** das Rastelement (16) einen scheibenartigen Bereich (7) mit einem über einen Teil des Umfangs überstehenden Rand aufweist.

5. Getriebeanordnung nach Anspruch 4, **dadurch gekennzeichnet, dass** das Rastelement (16) an der Antriebswelle (2) angeordnet ist.

6. Getriebeanordnung nach einem der vorhergehenden Ansprüche, **dadurch gekennzeichnet, dass** das Rastelement (15) eine Scheibe (12) mit einem Ausschnitt (13) aufweist, wobei der Ausschnitt (13) zum Mittelpunkt der Scheibe (12) gekrümmt ist.

7. Getriebeanordnung nach einem der vorhergehenden Ansprüche, **dadurch gekennzeichnet, dass** das Rastelement (15') einen vorstehenden Bereich (12') mit einem gekrümmten ausschnittsartigen Bereich (13') aufweist.

8. Getriebeanordnung nach Anspruch 6 oder 7, **dadurch gekennzeichnet, dass** das Rastelement (15, 15') an der Abtriebswelle (3, 3') angeordnet ist.

9. Getriebeanordnung nach einem der vorhergehenden Ansprüche, **dadurch gekennzeichnet, dass** das Zahnrad (10) und/oder das Zahnsegment (5, 10') und/oder das Rastelement (16, 15, 15') ein Kunststoff-Spritzgussteil ist.

10. Getriebeanordnung nach einem der vorhergehenden Ansprüche, **dadurch gekennzeichnet, dass** das Zahnrad (10) und/oder das Zahnsegment (5; 10') einstückig mit dem Rastelement (16, 15, 15') ausgebildet ist.

11. Getriebeanordnung nach einem der vorhergehenden Ansprüche, **dadurch gekennzeichnet, dass** das Zahnrad und/oder das Zahnsegment (5, 10') und/oder das Rastelement (16, 15') auf die Antriebswelle (2) beziehungsweise die Abtriebswelle (3') gesteckt ist, wobei eine formschlüssige Verbindung vorgesehen ist.

12. Belüftungssystem, insbesondere für ein Kraftfahrzeug, **gekennzeichnet durch** eine Getriebeanordnung (1) gemäß einem der Ansprüche 1 bis 11.
